# EUROPEAN PATENT APPLICATION

(11) **EP 3 373 148 A1**
(43) Date of publication of application: **12.09.2018**
(21) Application number: 15907802.1
(22) Date of filing: 05.11.2015
(51) Int. Cl.: G06F 12/00

(54) **DATABASE SYSTEM, TRANSACTION MANAGEMENT NODE, METHOD, AND PROGRAM**

(71) Applicant: Murakumo Corporation, Tokyo 153-0061 (JP)
(72) Inventor: YAMADA, Hiroyuki, Tokyo 153-0061 (JP); KONDO, Kenichi, Tokyo 153-0061 (JP)
(74) Representative: Plougmann Vingtoft a/s
(86) International application number: PCT/JP2015/081124
(87) International publication number: WO 2017/077616

(57) **Abstract**

The present invention addresses the problem of suppressing performance degradation of a system compared with prior art when modifying the content of a database while avoiding inconsistency in the database. In this database system, a transaction management node is provided with: an information acquisition unit for acquiring deletion target identification information from a session management node; a conflict determination unit for determining the presence or absence of a conflict of the deletion target by comparing information indicating modified data units with the deletion target identification information; an identifier setting unit for setting a transaction identifier with respect to a data set; an identifier transmission unit for transmitting the transaction identifier to a data store management node; and a modified data unit information accumulation unit for accumulating the deletion target identification information as information indicating modified data units if there is no conflict.

## Description

### TECHNICAL FIELD

The present disclosure relates to modifying contents of a database.

### BACKGROUND ART

Conventionally, as a synchronization method in a multiplexed database system, in a multiplexed database system in which an intermediary device transfers a processing request from a client to a plurality of servers and returns legitimate responses among responses received from each server to the client, a technique has been proposed in which the intermediary device assigns a sequence number to the processing request, each server rearranges the processing request based on the sequence number, and controls the input sequence to the DBMS so as not to cause lock conflict etc. in the server (See Patent Document 1).

Also, a distributed database system has been proposed in which the mobile agent is used for the data replication function when the database is updated at the site A, this update is detected, update transaction data is generated from the update contents, moved to the site B, an update transaction is executed, and the database is updated (Refer to Patent Document 2).

### PRIOR ART DOCUMENT

### PATENT LITERATURE

Patent Document 1: Japanese Patent Application Publication No. 2007-219598
Patent Document 2: Japanese Patent Application Publication No. 2001-350777

### SUMMARY OF THE INVENTION

### PROBLEM TO BE SOLVED BY INVENTION

Conventionally, in the database management system (DBMS), in order to guarantee that there is no inconsistency in the database due to modifying, the lock manager performed the conflict check for each location where the data in the database existed and acquired the lock. Therefore, if the conventional mechanism is applied to a system where the database is managed by multiple nodes, the lock is acquired for each node, the transaction manager checks whether or not the acquisition of all the locks succeeded, if all the acquisitions are successful, it is determined that the commit is completed (so-called two-phase commit).

For this reason, according to the conventional technique such as the two-phase commit, in a database managed by a plurality of nodes, it is necessary to perform complicated processing when modifying the parts managed by each node so as not to cause inconsistency in the database, resulting in complication of the system and eventual deterioration of performance.

In view of the above-mentioned problem, the technique according to the present disclosure aims to suppress the performance deterioration of the system as compared with the conventional technique, when modifying contents of the database while avoiding inconsistency in the database.

### MEANS FOR SOLVING THE PROBLEM

In the present disclosure, in order to solve the above-mentioned problem, the following means are adopted. That is, a database system according to the present disclosure is a database system comprising a plurality of session management nodes, a plurality of data store management nodes, and at least one transaction management node, wherein each of the plurality of session management nodes comprises: a processing data acquisition unit that acquires a processing data from at least one of the plurality of data store management nodes; a data set generation unit that generates a data set including target identification information capable of identifying a data unit of a modification target among a plurality of data stores managed by the plurality of data store management nodes when contents of a database are modified in processing on the acquired data; and a data set transmission unit that transmits the data set, wherein the data set transmission unit transmits at least a deletion target identification information which indicates a data unit of a deletion target, among the target identification information included in the data set, to the transaction management node, the transaction management node comprises: an information acquisition unit that acquires at least the deletion target identification information from the data set transmitted by the data set transmission unit of the session management node; a modified data unit information accumulation unit that accumulates information indicating a modified data unit in the database system; a conflict determination unit that determines the presence or absence of conflict on the deletion target by comparing the information indicating the modified data unit accumulated by the modified data unit information accumulation unit with the deletion target identification information, an identifier setting unit that sets a transaction identifier to the data set, the transaction identifier indicating a transaction relating to the data set, when the conflict determination unit determines the absence of conflict on the deletion target; and an identifier transmission unit that transmits the transaction identifier to at least one of the plurality of data store management nodes, wherein the modified data unit information accumulation unit accumulates the deletion target identification information as information indicating the modified data unit in the database system when the conflict determination unit determines the absence of conflict on the deletion target, and each of the plurality of data store management nodes comprises: a processing data transmission unit that transmits the processing data to the session management node; a modification information receiving unit that receives the data set and the transaction identifier; and a database management unit that manages the database, wherein the database management unit modifies contents of a database managed by the data store management node based on the data set and the transaction identifier.

### EFFECTS OF INVENTION

According to the technique of the present disclosure, it is possible to suppress the performance deterioration of the system as compared with the conventional technique, when modifying contents of the database while avoiding inconsistency in the database.

### BRIEF DESCRIPTION OF DRAWINGS

FIG. 1 is a diagram illustrating a structure of a database system according to an embodiment.
FIG. 2 is a diagram illustrating an outline of a hardware configuration of a node according to the embodiment.
FIG. 3 is a diagram illustrating an outline of a functional configuration of a node according to the embodiment.
FIG. 4 is a diagram illustrating the structure of a modification data set generated in the embodiment.
FIG. 5 is a flowchart (1) illustrating a flow of a database management process in the embodiment.
FIG. 6 is a flowchart (2) illustrating a flow of a database management process in the embodiment.
FIG. 7 is a flowchart (3) illustrating a flow of database management process in the embodiment.
FIG. 8 is a diagram illustrating a variation of a modification data set generated in the embodiment.
FIG. 9 is a flowchart (1) illustrating a variation of a database management process in the embodiment.
FIG. 10 is a flowchart (2) illustrating a variation of database management process in the embodiment.

### DESCRIPTION OF EMBODIMENTS

Embodiments of a system, an information processing apparatus, a method, and a program according to the present disclosure are described below with reference to the drawings. However, embodiments described below exemplify embodiments, and the system, the information processing apparatus, the method, and the program according to the present disclosure are not limited to the specific configurations described below. In practice, specific configurations according to the embodiment are appropriately adopted, and various improvements and modifications may be made.

### <System Configuration>

Hereinafter, technologies to reflect the contents of modification relating to the modification instruction on each data stores managed by a plurality of nodes belonging to the database system when a transaction including an instruction to modify the contents of a database is processed in a database system having a plurality of nodes, are described. Here, the data store is a word indicating a record of a part or all of the database managed by the database system according to the present disclosure, or a place where part or all of the database is held. The database management technology according to the present disclosure is not limited to the system exemplified in the present embodiment, but can be applied to a database system having a plurality of nodes. Further, the database management technology according to the present disclosure can be applied to various kinds of database systems such as an append type (redo-only type) database system and a database system using rollback segments. A database system that can adopt the database management technique according to the present disclosure is not limited to a specific type of database system.

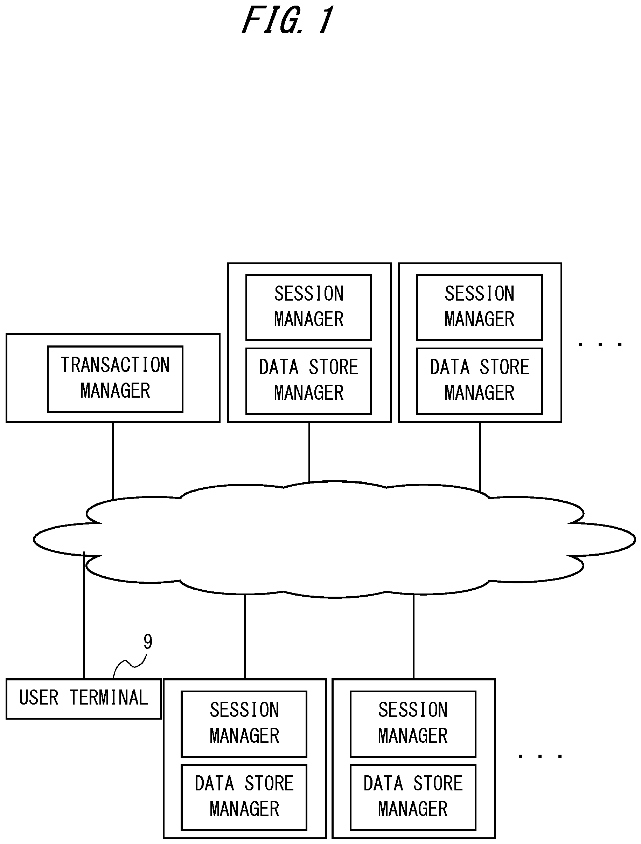

FIG. 1 is a diagram illustrating the structure of a database system according to the present embodiment. In the database system according to the present embodiment, a plurality of information processing apparatuses (nodes) are connected so as to communicate with each other via a network. In the database system according to the present embodiment, at least one of the plurality of nodes is a transaction management node having a role as a transaction manager. Further, the other nodes have a role as a session manager and a role as a data store manager, and these nodes operate as both a session management node and a data store management node.

However, the database system to which the database management technology according to the present disclosure can be applied is not limited to the database system having the configuration exemplified in the embodiment. For example, the session manager and the data store manager may operate at different nodes. In any case, the database system according to the present embodiment comprises a plurality of session management nodes, a plurality of data store management nodes, and at least one transaction management node.

Also, in the embodiment, each of the data store management nodes has a data store and a data store manager managing the data store, and each of these data stores has a part or all of the database managed by the database system according to the present disclosure. Therefore, in the database management technology according to the present disclosure, a modification data set including the contents of modifications to be applied to the database is generated by one of the session managers, and propagated to a plurality of data store managers belonging to the system, and data stores are modified based on the propagated modification data set, then the modification of the entire database is completed. Details of database management technology is described below.

Furthermore, the user terminal 9 is connected to the network, and any of the session managers can accept and execute a query transmitted from the user terminal 9 or the like.

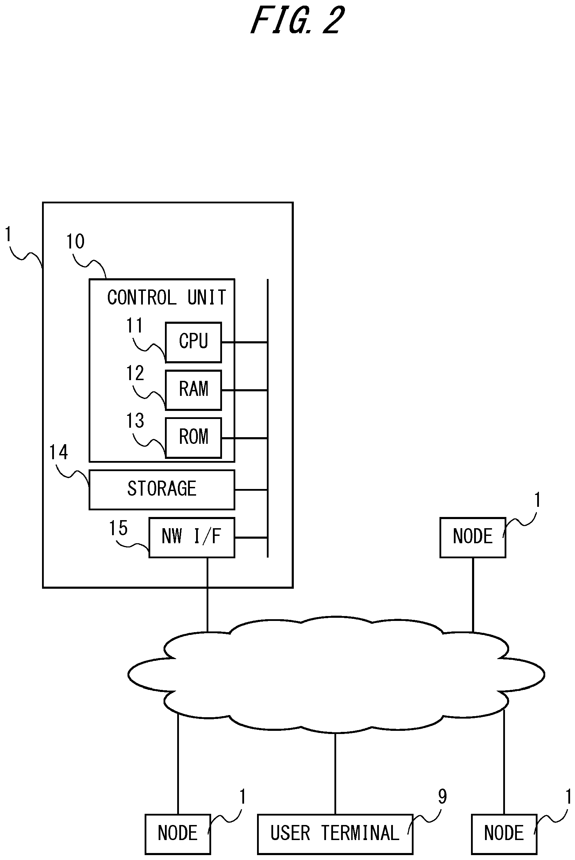

FIG. 2 is a diagram illustrating an outline of a hardware configuration of a node according to the embodiment. The node is a computer including a control unit 10 including a central processing unit (CPU) 11, a random access memory (RAM) 12, and a read only memory (ROM) 13, a storage (auxiliary storage device) 14, and a communication interface 15. However, regarding the specific hardware configuration of the node, omission, substitution, and addition can be appropriately made according to the mode of implementation. Also, nodes are not limited to a single device. A node may be realized by a plurality of devices using so-called cloud, distributed computing technology, or the like. The data store managed by each node may be built on the storage 14 or may be built on the RAM 12, and the data store construction location is not limited.

Various programs are stored in the storage 14 together with the operating system, and the CPU 11 reads and executes the program via the bus and the RAM 12, thereby realizing the function as the aforementioned node. Note that each node on which each manager operates may have the same hardware configuration.

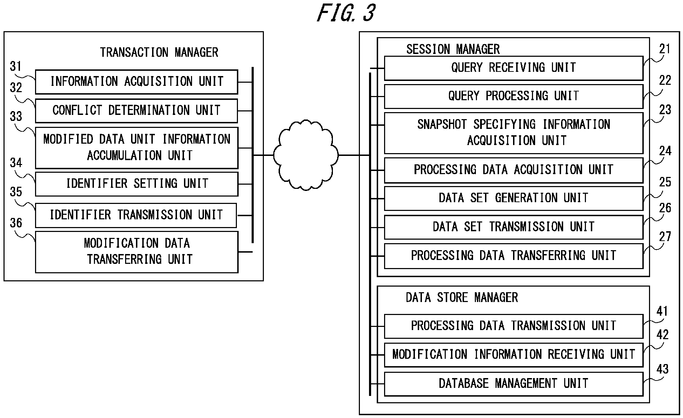

FIG. 3 is a diagram illustrating an outline of a functional configuration of a node according to the embodiment. As described above, in the present embodiment, each node has a role of one of a session manager, a transaction manager, and a data store manager.

First, the functional configuration of the session management node will be described. In the present embodiment, each of a plurality of nodes having a role as a session manager functions as the session management node including a query receiving unit 21, a query processing unit 22, a snapshot specifying information acquisition unit 23, a processing data acquisition unit 24, a data set generation unit 25, a data set transmission unit 26, and a processing data transferring unit 27, by the CPU 11 of the node reading and executing a session manager program via the bus and the RAM 12 of the node.

The query receiving unit 21 receives a query for the database system transmitted from the user terminal 9. In the database system according to the present embodiment, there are a plurality of session management nodes for executing the session manager, and any one of these plurality of session management nodes can receive a query from the user terminal 9.

The query processing unit 22 processes the query accepted by the query receiving unit 21.

The snapshot specifying information acquisition unit 23 acquires from the transaction manager information capable of specifying a snapshot used for processing. Here, the snapshot is a word indicating the content of the database at a certain point of time in the time series in which the content of the database changes as the transactions are successively committed. In the present embodiment, the information acquired by the snapshot specifying information acquisition unit 23 is a transaction ID (hereinafter referred to as "snapshot specifying transaction ID"). However, since the information to be acquired is for guaranteeing consistency of the data used for the processing of the transaction, it can be any information as long as it can specify the snapshot, and it is not limited to the transaction ID. For example, the information that can specify the snapshot may be information that can specify a certain point in time in a time series in which a plurality of transactions are successively processed, not a transaction ID.

The processing data acquisition unit 24 obtains data used for query processing from at least one of a plurality of data store managers. At this time, the processing data acquisition unit 24 acquires data in a specified snapshot by notifying the data store manager of the information acquired by the snapshot specifying information acquisition unit 23 (the transaction ID in the present embodiment).

When the data store on the node on which the processing data acquisition unit 24 operates has the entire database, the processing data acquisition unit 24 needs to issue the data request to the data store manager operating on the same node only. However, the data store manager receiving the data request from the processing data acquisition unit 24 is not limited to the data store manager operating on the same node. For example, when the data store on the node on which the processing data acquisition unit 24 operates does not have the entire database, a data request is issued to a node that manages a data store including data used for processing. In a database system where the session manager and the data store manager do not coexist on the same node, the session management node that wishes to acquire processing data issues a data request to other nodes on which the data store manager operates.

When the transaction related to the acquired data includes a modification instruction to modify the contents of the database, the data set generation unit 25 does not apply the modification based on the modification instruction to the database, and generates a modification data set including the tuple IDs of the tuples to be modified and the modification contents. In the present embodiment, a data unit handled as an individual record in the database is described as a tuple, but a database system to which the present disclosure can be applied is not limited to a relational database. The tuple ID is target identification information that can uniquely identify a tuple (data unit) to be modified among a plurality of data stores managed by a plurality of data store managers. In the present embodiment, the data set generation unit 25 generates unique tuple IDs by including different values (for example, node IDs) in the tuple IDs for each of the plurality of session management nodes. However, as long as the modification data set includes modification contents of the database based on the modification instruction and information capable of uniquely identifying the tuple to be modified in the database system, it is not limited to the exemplification in the present embodiment.

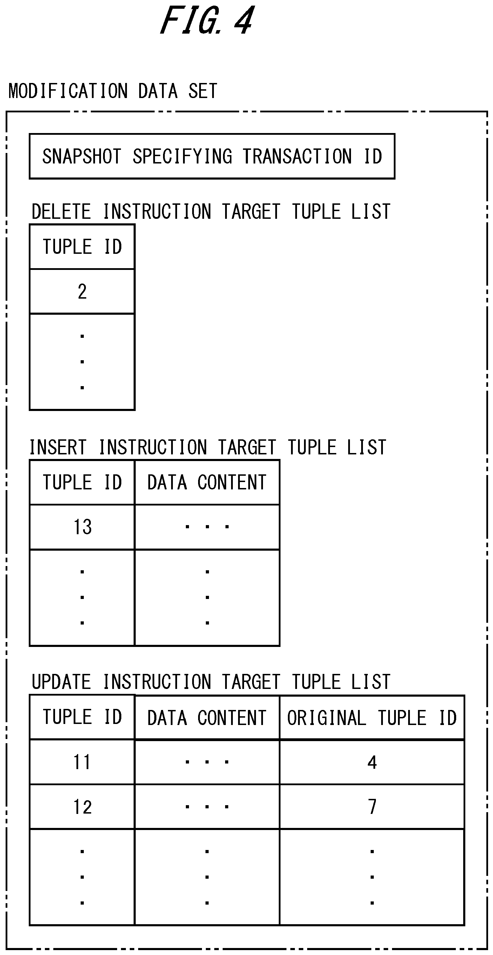

FIG. 4 is a diagram illustrating the structure of the modification data set generated in the embodiment. The modification data set is information generated by reading data including tuples subject to modification based on a modification instruction onto the RAM 12 and performing an operation based on the modification instruction on the data, and the modification data set includes the snapshot specifying transaction ID, DELETE instruction target tuple list, INSERT instruction target tuple list, and UPDATE instruction target tuple list. However, as described above, in the database system according to the present embodiment, at the point in time when the data set generation unit 25 of the session manager generates the modification data set, since no modification is made to each data store, the contents of the database are not modified.

The DELETE instruction target tuple list, the INSERT instruction target tuple list, and the UPDATE instruction target tuple list include information indicating tuples subject to modification instructions. Specifically, the tuple list for the DELETE instruction (DELETE instruction target tuple list) includes the tuple IDs (2 in the example shown in FIG. 4) of the tuples to be deleted. The tuple list for the INSERT instruction (INSERT instruction target tuple list) includes the tuple IDs (13 in the example shown in FIG. 4) of the tuples to be added and the content of data to be added. The tuple list for the UPDATE instruction (UPDATE instruction target tuple list) includes the tuple IDs of the tuples to be added (11 and 12 in the example shown in FIG. 4), the content of the data to be added, and the original tuple IDs (4 and 7 in the example shown in 4).

It should be noted that the specific configuration, format or generation method of the modification data set is not limited to the above example. For example, the tuple list included in the modification data set may be information in which the modification contents of the database by the modification instruction is described in the same or similar data format as the database. That is, the tuple list may be a copy of the modified target tuples, assuming that the modification by the modification instruction is applied.

The data set transmission unit 26 transmits the modification data set so as to reach the data store manager. In the present embodiment, the data set transmission unit 26 first transmits the entire modification data set to the transaction manager and then causes the transaction manager to transfer the modification data set so that the modification data set can be reached to the data store manager. However, the data set transmission unit 26 may transmit to the transaction manager the deletion target tuple IDs (deletion target identification information) indicating at least the tuples to be deleted among the tuple IDs included in the modification data set, and transmit the tuple IDs and the modification content to the data store manager directly or by relaying the transaction manager to reach the data store manager.

Further, the data set transmission unit 26 of each session manager transmits the modification data set so as to reach at least the data store manager that manages the data store including the data to be modified among the plurality of data store managers.

When receiving the data request from the processing data acquisition unit 24 of another session manager and acquiring processing data, the processing data transferring unit 27 transfers the processing data to the requesting session manager. As described above, the processing data acquisition unit 24 can transmit a request for processing data to another session manager. In this case, in the session manager that received the data request, the processing data acquisition unit 24 acquires processing data from the data store manager according to the data request, and the processing data transferring unit 27 transfers the acquired processing data to the requesting session manager.

Next, the functional configuration of the transaction management node will be described. In the present embodiment, the node having a role as a transaction manager functions as the transaction management node including an information acquisition unit 31, a conflict determination unit 32, a modified data unit information accumulation unit 33, an identifier setting unit 34, an identifier transmission unit 35, and a modification data transferring unit 36, by the CPU 11 of the node reading and executing a transaction manager program via the bus and the RAM 12 of the node.

The information acquisition unit 31 acquires at least the deletion target tuple IDs from among the modification data set transmitted by the data set transmission unit 26 of the session manager. In the present embodiment, as described above, since the data set transmission unit 26 transmits the entire modification data set so as to reach the data store manager via the transaction manager, the information acquisition unit 31 acquires the entire modification data set for including the deletion target tuple IDs.

The conflict determination unit 32 compares the deletion target tuple IDs (information capable of identifying the tuples to be modified in the database) acquired by the information acquisition unit 31 with the information indicating the tuples (in the present embodiment, the tuple IDs of the deleted tuples) accumulated by the modified data unit information accumulation unit 33, and checks whether or not there is a matching tuple ID, thereby determining the presence or absence of the conflict on the deletion target. When it is determined by the conflict determination unit 32 that there is conflict on the deletion target, the modification based on the modification data set is canceled. In the present embodiment, the tuple IDs described in the DELETE instruction target tuple list and the original tuple IDs described in the UPDATE instruction target tuple list are the deletion target tuple IDs.

When it is determined by the conflict determination unit 32 that there is no conflict on the deletion target, the modified data unit information accumulation unit 33 accumulates the deletion target tuple IDs acquired by the information acquisition unit 31 as information indicating tuples modified in the database system (information that can determine which tuple was modified at which point of time).

When it is determined by the conflict determination unit 32 that there is no conflict on the deletion target, the identifier setting unit 34 sets to the modification data set a transaction ID for identifying the transaction related to the modification data set. The transaction ID acquired here is an identifier that can determine the order in the time series of transactions. Therefore, the database management unit 43, which is described below, can modify the contents of the data store based on the modification data set and the transaction ID according to the order determined by the transaction ID.

The identifier transmission unit 35 transmits the transaction ID to at least the data store manager that is the destination of the modification data set of the transaction indicated by the transaction ID among the plurality of data store managers.

When it is determined by the conflict determination unit 32 that there is no conflict on the deletion target, the modification data transferring unit 36 transmits the modification data set at least the data store manager that manages the data store including the modification target data among the plurality of data store managers. At this time, the modification data set is transmitted in association with the transaction ID transmitted by the identifier transmission unit 35.

Next, the functional configuration of the data store management node will be described. In the present embodiment, each of the plurality of nodes having the role of a data store manager functions as the data store management node including a processing data transmission unit 41, a modification information receiving unit 42 and a database management unit 43, by the CPU 11 of the node reading and executing a data store manager program via the bus and the RAM 12 of the node.

When receiving a data request with snapshot-specifying information (in the present embodiment, the transaction ID acquired by the snapshot specifying information acquisition unit 23) from the session manager, the processing data transmission unit 41 transmits to the session manager the processing data in a state in which modifications based on the modification data set up to the specified snapshot are applied. In the present embodiment, the processing data transmission unit 41 waits for the modification based on the modification data set corresponding to the specified transaction ID to be applied to the data store by the database management unit 43, then extracts the processing data and sends it to the session manager. In the present embodiment, by providing such a function, consistency of the referenced data can be guaranteed.

The modification information receiving unit 42 receives the modification data set and the transaction ID. In the present embodiment, the modification data set transmitted by the session manager is received via the transaction manager. However, as in other embodiment described below, the modification data set may be directly received from the session manager.

The database management unit 43 manages part or all of the database managed by the database management technique according to the present disclosure as a data store. Further, the database management unit 43 modifies the contents of the data store managed by the data store manager based on the modification data set and the transaction ID according to the order determined by the transaction ID. A delay may occur in reflecting the modification data set received by the data store manager on the data store. When the transaction ID and the data request are received from the session manager in a state where the reflection of the modification data set is delayed, the processing data transmission unit 41 waits for the modification based on the modification data set corresponding to the specified transaction ID to be applied to the data store by the database management unit 43, and then extracts processing data, as described above.

### <Process Flow>

Next, details of the process according to the present embodiment will be described. It should be noted that the specific contents, order, etc. of the processes described in the present embodiment are examples for implementation. Specific processing contents, order and the like may be appropriately selected according to embodiments.

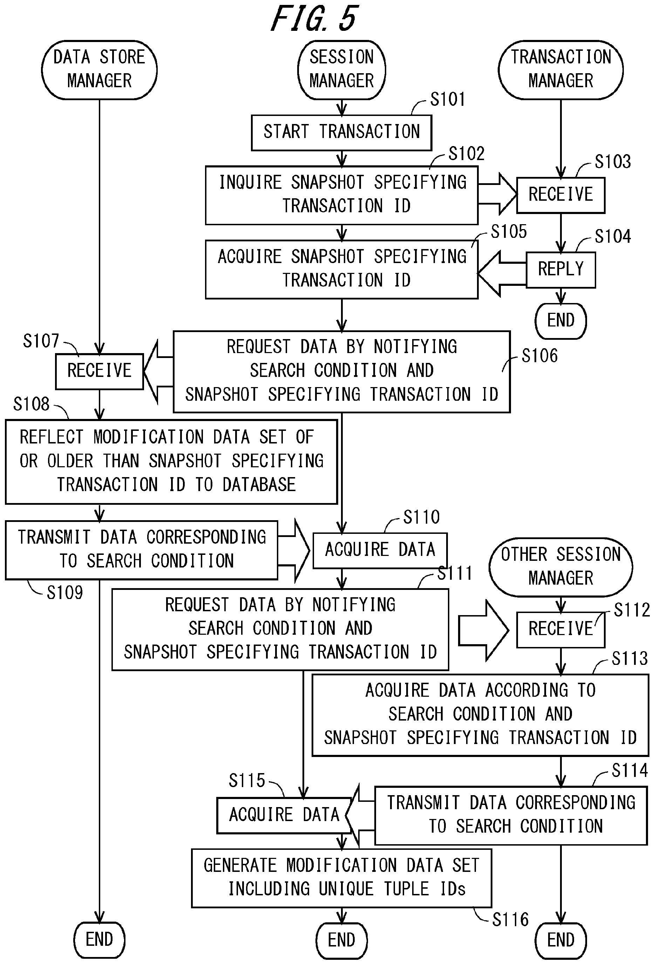

FIG. 5, FIG. 6 and FIG. 7 are flowcharts illustrating the flow of the database management process in the embodiment. The processing shown in the flowchart of FIG. 5 is triggered by accepting the query transmitted from the user terminal 9 by the query receiving unit 21 of any one of the session management nodes belonging to the database system, and receiving a start instruction of a transaction which includes a modification instruction on the contents of the database.

In steps S101 to S105, a transaction is started, and a transaction ID capable of specifying a snapshot used for processing is acquired. When a transaction start instruction is received (step S101), the snapshot specifying information acquisition unit 23 inquires the transaction manager about the transaction ID that can specify the snapshot used for the process (steps S102 and S103). Then, the transaction manager transmits the transaction ID last assigned at the time of reply to the session manager (step S104), and the snapshot specifying information acquisition unit 23 of the session manager acquires this transaction ID (step S105). In the present embodiment, the transaction manager transmits the transaction ID that was last given (that is, the latest) at the time of reply, but the transaction ID transmitted at this time is not limited to the latest one. Thereafter, the process proceeds to step S106.

In steps S106 to S110, data necessary for the processing of the query included in the transaction is acquired. The processing data acquisition unit 24 requests data by notifying of the search condition created based on the query received by the query receiving unit and the snapshot specifying transaction ID acquired in step S105, the data store manager operating on the same node as the node on which the processing data obtaining unit 24 operates (step S106). Upon receiving the data request (step S107), the processing data transmission unit 41 of the data store manager waits for the received modification data set of or older than the snapshot specifying transaction ID being reflected to the data store (step S108), and transmits data corresponding to the search condition to the session manager (step S109). The details of the reflection processing in step S108 are similar to those in step S303 to be described below, so the description thereof is omitted. Thereafter, the processing data acquisition unit 24 acquires the desired data by receiving the data transmitted from the data store manager (step S110).

If the data to be acquired does not exist in the data store managed by the data store manager operating on the same node as the node on which the processing data acquisition unit 24 operates, the processing data acquisition unit 24 acquires the data by notifying the session manager operating in the other node of the search condition and the snapshot specifying transaction ID (steps S111 to S115).

In steps S111 and S112, a data request is transmitted and received between the session managers. The processing data acquisition unit 24 of the session manager that wishes to acquire the processing data notifies the session manager operating in another node of the search condition and the snapshot specifying transaction ID and requests data (step Sill). Then, the transmitted data request is received by the other session manager (step S112). Thereafter, the process proceeds to step S113.

In step S113, data acquisition is performed by the other session manager that has received the data request. Upon receiving the data request in step S112, the session manager requests the data from the data store manager operating on the same node as the node on which the data manager operates, acquires the data corresponding to the search condition and the snapshot specifying transaction ID. Here, the flow of processing for the session manager that has received the data request to acquire the data from the data store manager is similar to the processing shown in step S106 to step S110, so that illustration thereof is omitted. Thereafter, the process proceeds to step S114.

In step S114 and step S115, processing data is transmitted and received between the session managers. The processing data transferring unit 27 of the session manager that received the data request transfers the processing data acquired in step S113 to the session manager that had sent the data request (step S114). Thereafter, the processing data acquisition unit 24 of the session manager that had sent the data request acquires processing data by receiving the transmitted data (step S115). Thereafter, the process proceeds to step S116.

As described above, the latest transaction ID is acquired as the information that can specify the snapshot in the processing from step S102 to step S105. Therefore, in the transaction started in step S101, it is possible to refer to all the modification contents of the transactions whose commit has been completed at the start time of the transaction.

Upon receiving the data request, the data store manager or the session manager may extract and send only data matching the search condition included in the received data request, or may send a group of data including data matching the search condition, in a unit of page, table, etc. Also, by including an instruction for data processing (for example, JOIN processing of multiple tables, etc.) in the data request, it is possible to not only extract data but also process the data for the session manager or the data store manager which received the data request and make the session manager that has transmitted the data request to receive the data processed in accordance with the instruction.

In step S116, a modification data set including unique tuple IDs is generated. Upon receiving the commit instruction transmitted by the user terminal 9, the data set generation unit 25 generates a modification data set including the tuple IDs of the modification target and the modification content without adding the modification based on the modification instruction to the database. As described above, the tuple IDs generated here are unique tuple IDs among a plurality of data stores managed by a plurality of data store managers.

That is, in the database management technology according to the present disclosure, the tuple ID of a tuple to be added newly to the database by the modification instruction is numbered at this stage. When the modification instruction is an UPDATE instruction or an INSERT instruction, a tuple ID that is newly numbered and unique in the entire database system (11, 12 and 13 in the examples in FIG. 4) is written in the tuple ID of the UPDATE instruction target tuple list or the INSERT instruction target tuple list. In addition, the generated modification data set includes the snapshot specifying transaction ID acquired in step S105. After that, the processing shown in this flowchart ends.

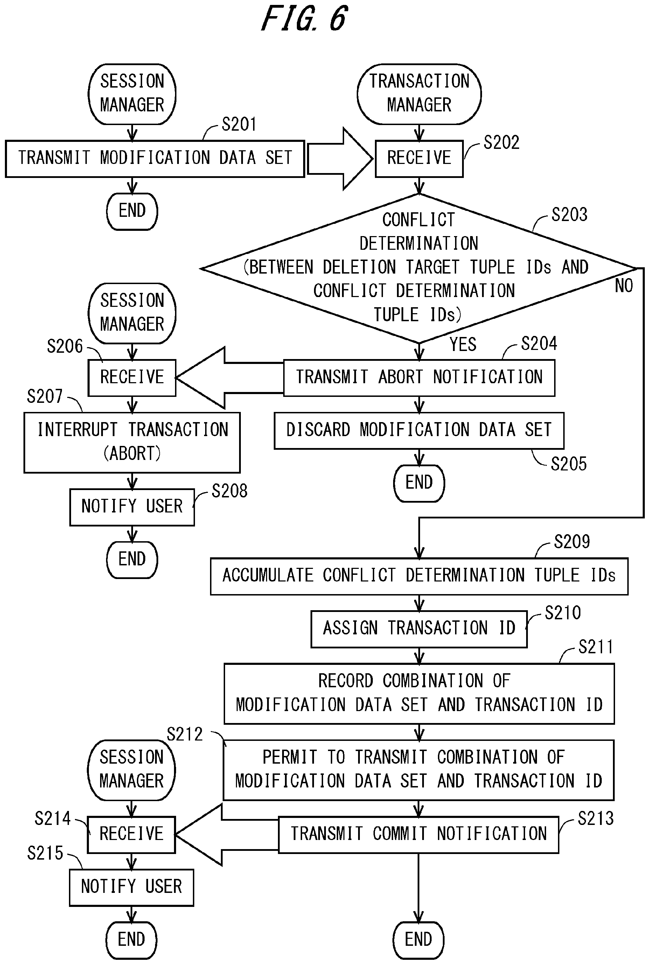

The process shown in the flowchart of FIG. 6 is executed with the session manager generating a modification data set as a trigger.

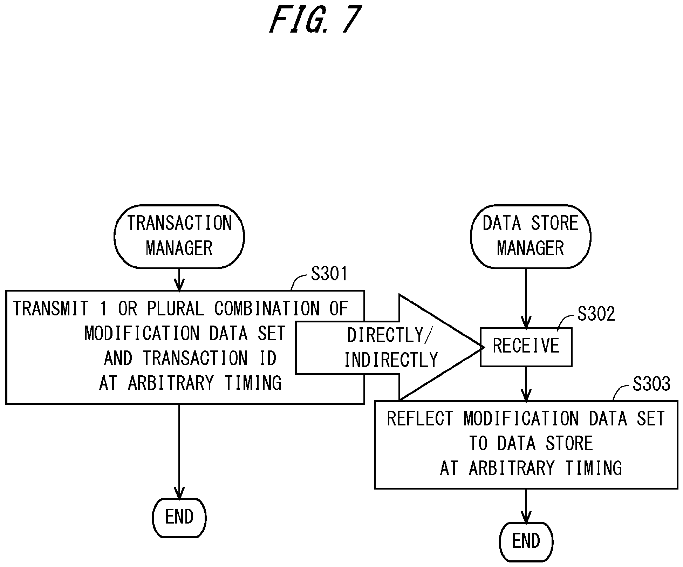

In steps S201 and S202, the modification data set is transmitted and received. The data set transmission unit 26 of the session manager transmits the modification data set to the transaction manager (step S201). The transmitted modification data set is then transferred by the transaction manager and reaches the data store manager (described below with reference to FIG. 7).

Then, the information acquisition unit 31 of the transaction manager acquires the modification data set transmitted by the session manager (step S202). Thereafter, the process proceeds to step S203.

In step S203, conflict determination is performed. The conflict determination unit 32 determines whether or not there is a conflict regarding the deletion target, by comparing the deletion target tuple IDs acquired in step S202 with the conflict determination tuple IDs accumulated when step S209, which is described below, is executed before, and confirming if there is a matching tuple ID. As described above, in the present embodiment, the deletion target tuple IDs are the tuple IDs described in the DELETE instruction target tuple list and the original tuple IDs described in the UPDATE instruction target tuple list.

Further, the conflict determination tuple IDs are the tuple IDs accumulated in step S209 to be described below when the database management process according to the present flowchart is executed before. As described above, the snapshot specifying transaction ID acquired in step S105 is included in the modification data set, and the conflict determining unit 32 compares the conflict determination tuple IDs accumulated after the snapshot specified by the transaction ID with the deletion target tuple IDs.

As a result of the conflict determination, if it is determined that there is a conflict between the deletion target tuple IDs and the conflict determination tuple IDs (matching tuple ID exists), the processing proceeds to step S204. On the other hand, as a result of the conflict determination, if it is determined that there is no conflict between the deletion target tuple IDs and the conflict determination tuple IDs (no matching tuple ID exists), the processing proceeds to step S209. When the instruction included in the modification data set is only the INSERT instruction, since the instruction does not modify the existing tuples, conflict determination is not performed. When the instruction included in the modification data set is only the INSERT instruction, the process may automatically proceed to step S209.

In steps S204 to 208, the transaction related to the modification data set is interrupted, and the modification based on the modification data set is canceled. When it is determined that there is conflict of the deletion target in the conflict determination in step S203, the transaction manager and the session manager stop modifying the database based on the modification data set including the corresponding deletion target tuples.

Specifically, the transaction manager transmits an abort notification to the session manager that sent the modification data set (step S204), and discards the received modification data set (step S205). Then, the session manager that has received the abort notification (step S206) interrupts (aborts) the transaction related to the modification data set (step S207) and notifies the user of the interruption of the transaction (step S208). Thereafter, the process shown in this flowchart ends.

In step S209, conflict determination tuple IDs are accumulated. If it is determined that there is no conflict of the deletion target in step S203, the modified data unit information accumulation unit 33 accumulates the deletion target tuple IDs acquired in step S202 as conflict determination tuple IDs. The conflict determination tuple IDs accumulated here are referred to in step S203 when the database management process according to this flowchart is executed from the next time onward. Thereafter, the process proceeds to step S210.

In step S210, transaction ID is assigned. If it is determined that there is no conflict of the deletion target in step S203, the identifier setting unit 34, before the content of the database is modified by adding the modification based on the modification data set to the data store, assign a transaction ID for identifying the transaction related to the modification data set. As described above, the transaction ID is an identifier that can determine the order in the time series of the transactions. In the present embodiment, an integer number is assigned in ascending order in order of completion of conflict determination. Thereafter, the process proceeds to step S211.

In steps S211 and S212, the modification data set is recorded, and transmission of the modification data set and the transaction ID is permitted. The transaction manager associates the assigned transaction ID with the modification data set and records it in the storage of the transaction management node (step S211). In the present embodiment, the combination of the transaction ID and the modification data set recorded in the storage corresponds to a transaction log. Then, the transaction manager permits the modification data transferring unit 36 and the identifier transmission unit 35 to transmit the modification data set and transaction ID to the data store manager (step S212). The modification data set and the transaction ID permitted for transmission are transmitted in a process to be described below with reference to FIG. 7. Thereafter, the process proceeds to step S213.

In steps S213 to S215, a commit notification is made. The transaction manager transmits a commit notification to the session manager that sent the modification data set (step S213). Upon receiving the commit notification (step S214), the session manager notifies the user terminal 9, the sender of the query, that the commit has been completed (step S215). That is, with the database management technology according to the present disclosure, the user may be notified of the commitment without waiting for actual content modification of the database by reflecting on the data store. Thereafter, the process shown in this flowchart ends.

The process shown in the flowchart of FIG. 7 is executed at the transaction manager as triggered by the permission to transmit the modification data set and the transaction manager ID (see step S212) or at regular intervals.

In steps S301 and S302, one or a plurality of modification data sets and transaction IDs are transmitted and received. The modification data transferring unit 36 and the identifier transmission unit 35 of the transaction manager transmit (transfer) the modification data set and the transaction ID permitted for transmission at step S212 to at least the data store manager managing the data store to be modified based on the modification data set (step S301). At this time, the modification data set is transmitted in association with the transaction ID transmitted by the identifier transmission unit 35. Also, a plurality of modification data sets and transaction IDs may be transmitted collectively. By transmitting a plurality of data sets and transaction IDs collectively, the communication load in the database system can be reduced.

Here, the modification data set and the transaction ID are transmitted to the appropriate data store manager among the plurality of data store managers. Means for performing such processing is not limited, and various means may be adopted. For example, when a modification data set includes an UPDATE instruction or a DELETE instruction, a means for transmitting the modification data set and the transaction ID to the node managing the data store including the modification target data, may be adopted. At this time, the transaction manager can know the node managing the data store including the modification target data by receiving notification from the session manager.

In addition, for example, when a method that each table in the database is managed by the data store management node determined based on the hash value of the table ID is adopted, means for sharing the list of each data store management node between the session managers and the transaction manager, referring the list based on the hash value calculated based on the table ID of the table including the modification target data, and determining the data store management node of the transmission destination, may be adopted.

Also, the modification data set may be transmitted directly to the target data store manager or may be indirectly transmitted via a plurality of nodes. When the modification data set is indirectly transmitted, the node that received the modification data set transmits (transfers) the modification data set to another node. For example, if the entire database has been replicated to all data store management nodes, the modification data set is repeatedly transferred until it reaches all data store management nodes. In the database system according to the present embodiment, modification content may be propagated to a plurality of nodes belonging to the database system in this manner. The modification information receiving unit 42 of the data store manager receives the modification data set and the transaction ID (step S302). Thereafter, the process proceeds to step S303.

In step S303, the modification data set is reflected in the data store. Upon receiving the modification data set and the transaction ID, the database management unit 43 of the data store manager, in accordance with the order determined by the transaction ID, modifies, based on the modification data set and the transaction ID, contents of the data store managed by the data store manager. The database management unit 43 modifies the data store by rewriting / adding / deleting the tuples in the data store based on the modification data set. After that, the processing shown in this flowchart ends.

### <Variation>

Next, variations in implementing the system, the information processing apparatus, the method, and the program according to the present disclosure will be described.

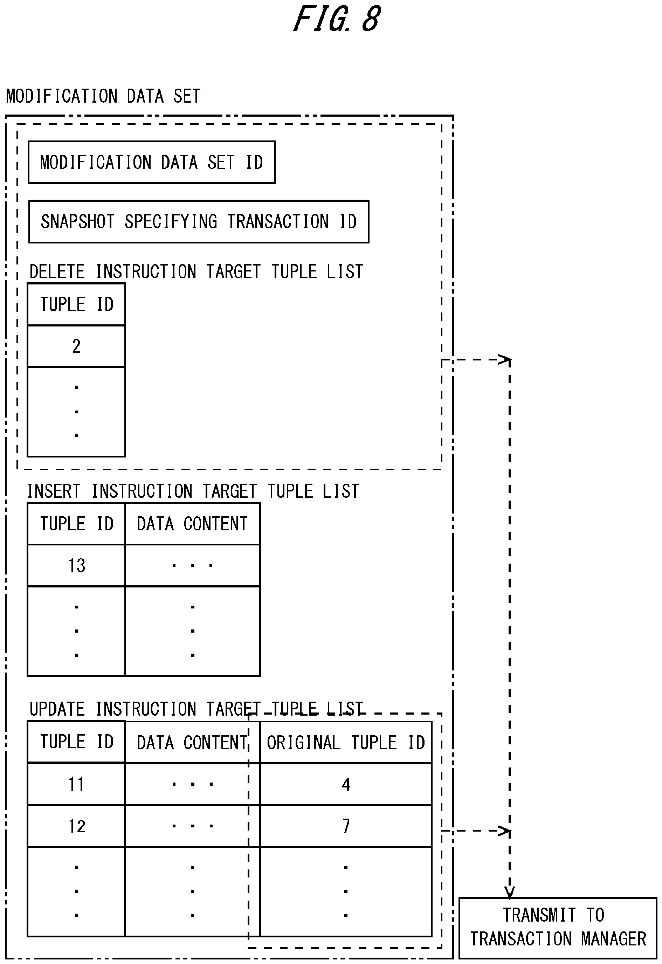

FIG. 8 is a view illustrating a variation of the modification data set generated in the embodiment. The configuration of the modification data set shown in FIG. 8 is substantially the same as the modification data set described with reference to FIG. 4, except it further includes a modification data set ID. The modification data set ID is identification information capable of uniquely identifying the modification data set, and is given at the time of generation of the modification data set. In addition, the modification data set shown in FIG. 4 is once transferred from the session manager to the transaction manager and then transferred by the transaction manager to the data store manager, but the modification data set shown in FIG. 8 is partially transmitted from the session manager to the transaction manager, and the entire data set is transmitted from the session manager to the data store manager without passing through the transaction manager.

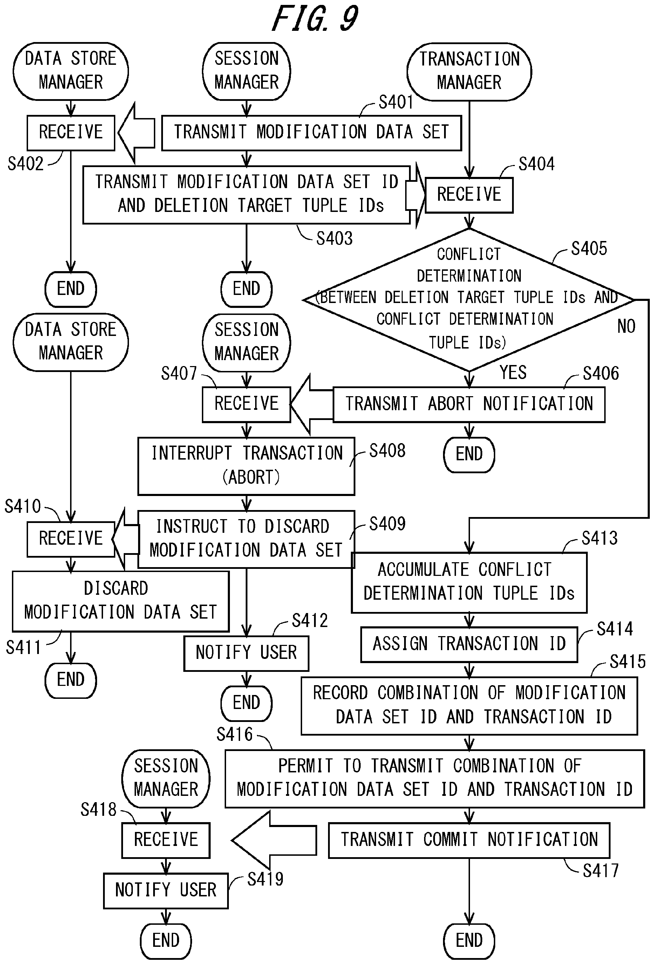

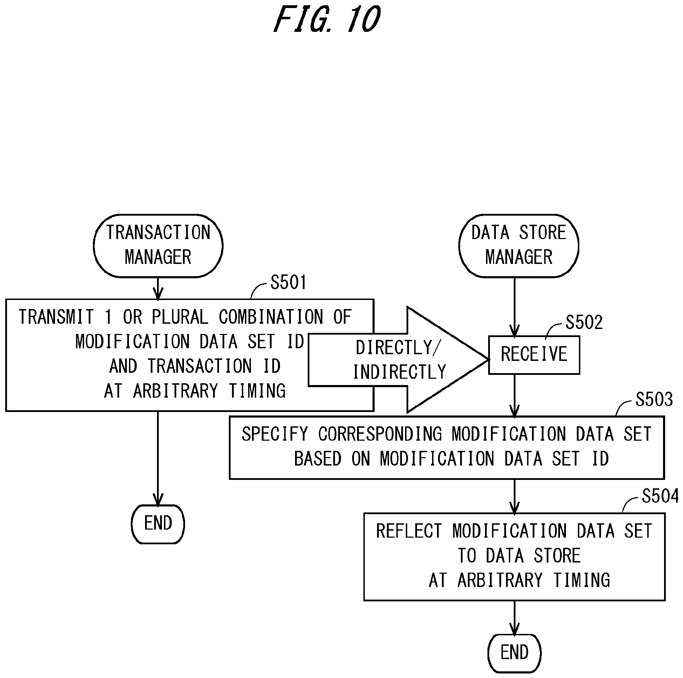

FIG. 9 and FIG. 10 are flowcharts illustrating variations of database management process in the embodiment. FIG. 9 shows a variation of the process described with reference to FIG. 6, and FIG. 10 shows a variation of the process described with reference to FIG. 7. The processing up to the generation of the modification data set is substantially the same as the processing described with reference to FIG. 5 also in this variant, so the description is omitted.

The process shown in the flowchart of FIG. 9 is executed with the session manager generating a modification data set as a trigger.

In steps S401 and S402, the modification data set is transmitted and received. The data set transmission unit 26 of the session manager transmits the modification data set to the data store manager (step S401). That is, in the variation described with reference to FIG. 9, the data set transmission unit 26 of the session manager directly transmits the modification data set ID, the tuple IDs and the modification contents included in the modification data set to the data store manager. In the present embodiment, the data set transmission unit 26 of each session manager transmits the modification data set to at least the data store manager that manages the data store including the data to be modified among the plurality of data store managers directly. Then, the modification information receiving unit 42 of the data store manager acquires the modification data set transmitted by the session manager (step S402). Thereafter, the process proceeds to step S403.

In steps S403 and S404, the modification data set ID and the deletion target tuple IDs are transmitted and received. The data set transmission unit 26 of the session manager transmits the modification data set ID, the snapshot specifying transaction ID, and the deletion target tuple IDs to the transaction manager (step S403). The transmitted modification data set ID is then transferred by the transaction manager and reaches the data store manager. That is, in the variation described with reference to FIG. 9, the data set transmission unit 26 of the session manager transmits the modification data set ID so as to reach the data store manager via the transaction manager (transfer processing is described below with reference to FIG. 10).

Then, the information acquisition unit 31 of the transaction manager acquires the modification data set ID, the snapshot specifying transaction ID, and the deletion target tuple IDs transmitted by the session manager (step S404). Thereafter, the process proceeds to step S405.

In step S405, conflict determination is performed. The specific processing content of the conflict determination is similar to the content of the processing described with respect to step S203 in FIG. 6, so the description is omitted. As a result of the conflict determination, if it is determined that there is a conflict between the deletion target tuple IDs and the conflict determination tuple IDs, the process proceeds to step S406. On the other hand, as a result of the conflict determination, if it is determined that there is no conflict between the deletion target tuple IDs and the conflict determination tuple IDs, the process proceeds to step S413.

In steps S406 to S412, the transaction related to the modification data set is interrupted, and the modification based on the modification data set is canceled. If it is determined that there is a conflict regarding the deletion target in the conflict determination in step S405, the transaction manager, the session manager, and the data store manager stop modifying the database based on the modification data set including the corresponding deletion target tuples.

Specifically, the transaction manager transmits an abort notification to the session manager that sent the modification data set ID (step S406). Upon receiving the abort notification (step S407), the session manager interrupts (aborts) the transaction relating to the modification data set (step S408), and instructs at least the data store management node to which the modification data set has been sent, to discard the modification data set (step S409). Upon receiving the instruction to discard the modification data set (step S410), the data store manager discards the received modification data set (step S411). In addition, the session manager notifies the user of the interruption of the transaction (step S412). After that, the processing shown in this flowchart ends.

In steps S413 and S414, conflict determination tuple IDs are accumulated, and transaction ID is assigned. If it is determined in step S405 that there is no conflict regarding the deletion target, the modified data unit information accumulation unit 33 accumulates the deletion target tuple IDs acquired in step S402 as conflict determination tuple IDs (step S413). Further, the identifier setting unit 34 assigns the transaction ID (step S414). Since the specific processing contents of step S413 and step S414 are similar to the processing contents described with respect to step S209 and step S210 of FIG. 6, the description thereof is omitted. Thereafter, the process proceeds to step S415.

In steps S415 and S416, the modification data set ID and the transaction ID are recorded, and transmission of the modification data set ID and the transaction ID is permitted. The transaction manager associates the assigned transaction ID with the modification data set ID, and records it in the storage of the transaction management node (step S415). Then, the transaction manager permits the modification data transferring unit 36 and the identifier transmission unit 35 to transmit the modification data set ID and the transaction ID to the data store manager (step S416). The modification data set ID and the transaction ID permitted for transmission are transmitted in a process to be described below with reference to FIG. 10. Thereafter, the process proceeds to step S417.

In steps S417 to S419, a commit notification is made. The specific processing content of the commit notification is similar to the processing contents described in relation to step S213 to step S215 in FIG. 6, so the explanation is omitted. After that, the processing shown in this flowchart ends.

The process shown in the flowchart of FIG. 10 is executed at the transaction manager as triggered by the permission to transmit the modification data set and the transaction manager ID (see step S416) or at regular intervals.

In steps S501 and S502, one or plural modification data set IDs and transaction IDs are transmitted and received. The modification data transferring unit 36 and the identifier transmission unit 35 of the transaction manager transmit (transfer) the modification data set ID and the transaction ID permitted for transmission at step S416 to at least the data store manager managing the data store to be modified based on the modification data set indicated by the modification data set ID (step S501). At this time, the modification data set ID is transmitted in association with the transaction ID transmitted by the identifier transmission unit 35. Further, a plurality of modification data set IDs and transaction IDs may be transmitted collectively. By transmitting a plurality of data set IDs and transaction IDs collectively, the communication load in the database system can be reduced. Further, in this flowchart, since the modification data set ID, not the entire modification data set, is transmitted, the communication load in the database system is small as compared with the process described with reference to FIG. 7.

Here, since the means for transmitting the modification data set ID to the appropriate data store manager among the plurality of data store managers, and the fact that the modification data set ID may be transmitted by propagation between the nodes, are substantially the same as the modification data set transmission processing of FIG. 7, the descriptions thereof are omitted. The modification information receiving unit 42 of the data store manager receives the modification data set ID and the transaction ID (step S502). Thereafter, the process proceeds to step S503.

In steps S503 and S504, the modification data set is reflected in the data store. The database management unit 43 of the data store manager compares the modification data set IDs included in the modification data sets received in advance in step S404 with the modification data set ID received in step S502, and identifies the modification data set corresponding to the received modification data set ID (step S503). The database management unit 43 modifies the contents of the data store managed by the data store manager based on the identified modification data set and the transaction ID according to the order determined by the transaction ID. After that, the processing shown in this flowchart ends.

### <Effects>

According to the database system related to the present embodiment, it is possible to suppress the performance deterioration of the system as compared with the conventional technique when modifying the contents of the database while avoiding inconsistency in the database, by causing the specific node (the transaction management node in the present embodiment) to manage the conflict determination information related to the entire database system, and causing the node to process the conflict determination related to the entire database system.

## Claims

1. A database system comprising a plurality of session management nodes, a plurality of data store management nodes, and at least one transaction management node,
wherein each of the plurality of session management nodes comprises:
a processing data acquisition unit that acquires a processing data from at least one of the plurality of data store management nodes;
a data set generation unit that generates a data set including target identification information capable of identifying a data unit of a modification target among a plurality of data stores managed by the plurality of data store management nodes when contents of a database are modified in processing on the acquired data; and
a data set transmission unit that transmits the data set, wherein the data set transmission unit transmits at least a deletion target identification information which indicates a data unit of a deletion target, among the target identification information included in the data set, to the transaction management node,
the transaction management node comprises:
an information acquisition unit that acquires at least the deletion target identification information from the data set transmitted by the data set transmission unit of the session management node;
a modified data unit information accumulation unit that accumulates information indicating a modified data unit in the database system;
a conflict determination unit that determines the presence or absence of conflict on the deletion target by comparing the information indicating the modified data unit accumulated by the modified data unit information accumulation unit with the deletion target identification information,
an identifier setting unit that sets a transaction identifier to the data set, the transaction identifier indicating a transaction relating to the data set, when the conflict determination unit determines the absence of conflict on the deletion target; and
an identifier transmission unit that transmits the transaction identifier to at least one of the plurality of data store management nodes,
wherein the modified data unit information accumulation unit accumulates the deletion target identification information as information indicating the modified data unit in the database system when the conflict determination unit determines the absence of conflict on the deletion target, and
each of the plurality of data store management nodes comprises:
a processing data transmission unit that transmits the processing data to the session management node;
a modification information receiving unit that receives the data set and the transaction identifier; and
a database management unit that manages the database, wherein the database management unit modifies contents of the database managed by the data store management node based on the data set and the transaction identifier.

2. The database system according to claim 1, wherein the data set generation unit generates the data set including the target identification information and the modification content and
the data set transmission unit transmits the data set to reach at least one of the plurality of data store management nodes.

3. The database system according to claim 2, wherein the data set transmission unit transmits the target identification information and the modification content to the data store management node directly, or transmits the target identification information and the modification content to reach the data store management node via the transaction management node.

4. The database system according to claim 2, wherein the data set transmission unit of the session management node transmits the data set to reach the data store management node via the transaction management node,
the information acquisition unit of the transaction management node acquires the data set transmitted by the data set transmission unit, and
the transaction management node further comprises a modification data transferring unit that transfers the data set to at least one of the plurality of the data store management nodes when the conflict determination unit determines the absence of conflict on the deletion target.

5. The database system according to claim 2, wherein the data set generated by the data set generation unit further includes a data set identifier capable of identifying the data set,
the data set transmission unit of the session management node transmits the data set identifier, the target identification information and the modification content directly to the data store management node, and transmits the data set identifier to reach the data store management node via the transaction management node,
the transaction management node further comprises a modification data transferring unit that transfers the data set identifier received from the data set transmission unit to at least one of the plurality of data store management nodes when the conflict determination unit determines the absence of conflict on the deletion target, and
the database management unit of the data store management node modifies the contents of the data store managed by the data store management node, based on the data set identified by the data set identifier and the transaction identifier.

6. The database system according to any one of claims 1 to 5, wherein the session management node further comprises a snapshot specifying information acquisition unit that acquires information capable of specifying a snapshot used for processing, and
the processing data acquisition unit acquires the data in the snapshot by specifying information acquired by the snapshot specifying information acquisition unit.

7. The database system according to claim 6, wherein the transaction identifier is an identifier capable of determining the order of transactions in a time series,
the information acquired by the snapshot specifying information acquisition unit is a transaction identifier, and
the processing data transmission unit transmits the processing data to the session management node when a request for the data in the snapshot specifying a transaction identifier is received from the session management node, the processing data being in a state in which a modification based on the data set corresponding to transactions up to a transaction indicated by a specified transaction identifier is applied.

8. The database system according to claim 7, wherein the processing data transmission unit extracts the processing data and transmits the processing data to the session management node, after waiting for the modification based on the data set corresponding to transactions up to the transaction indicated by the specified transaction identifier being applied to the database by the database management unit.

9. The database system according to any one of claims 1 to 8, wherein the processing data acquisition unit of the session management node is capable of transmitting a request for the processing data to another session management node,
in the second session management node which received the data request transmitted from the processing data acquisition unit of the first session management node, the processing data acquisition unit acquires the processing data from the data store management node according to the data request, and
the session management node further comprises a processing data transferring unit that transfers the processing data to the first session management node when the session management node acquires the processing data as the second session management node.

10. The database system according to any one of claims 1 to 9, wherein the transaction identifier is an identifier capable of determining the order of transactions in a time series,
the database managing unit modifies contents of the database based on the data set and the transaction identifier according to the order determined by the transaction identifier.

11. The database system according to any one of claims 1 to 10, wherein each of the session management nodes further comprises:
a query receiving unit that receives a query; and
a query processing unit that processes the query, and
the processing data acquisition unit acquires the data used for processing the query from at least one of the plurality of the data store management nodes.

12. The database system according to any one of claims 1 to 11, wherein, when the conflict determination unit determines the presence of conflict on the deletion target, the modification based on the data set is canceled.

13. The database system according to any one of claims 1 to 12, wherein the data set generation unit generates the target identification information capable of identifying the target data unit between a plurality of data stores managed by the plurality of data store management nodes, by including a value different for each of the plurality of session management nodes in the target identification information.

14. A transaction management node capable of communicating with a plurality of session management nodes and a plurality of data store management nodes, the transaction management node comprises:
an information acquisition unit that acquires at least a deletion target identification information which indicates a data unit of a deletion target from a data set transmitted by the session management node, the data set including target identification information capable of identifying a data unit of a modification target among a plurality of data stores managed by the plurality of data store management nodes;
a modified data unit information accumulation unit that accumulates information indicating a modified data unit in a database system;
a conflict determination unit that determines the presence or absence of conflict on the deletion target by comparing the information indicating the modified data unit accumulated by the modified data unit information accumulation unit with the deletion target identification information,
an identifier setting unit that sets a transaction identifier to the data set, the transaction identifier indicating a transaction relating to the data set, when the conflict determination unit determines the absence of conflict on the deletion target; and
an identifier transmission unit that transmits the transaction identifier to at least one of the plurality of data store management nodes,
wherein the modified data unit information accumulation unit accumulates the deletion target identification information as information indicating the modified data unit in the database system when the conflict determination unit determines the absence of conflict on the deletion target.

15. A transaction management method executed by a computer of a transaction management node capable of communicating with a plurality of session management nodes and a plurality of data store management nodes, the transaction management method comprises:
acquiring at least a deletion target identification information which indicates a data unit of a deletion target from a data set transmitted by the session management node, the data set including target identification information capable of identifying a data unit of a modification target among a plurality of data stores managed by the plurality of data store management nodes;
accumulating information indicating a modified data unit in a database system;
determining the presence or absence of conflict on the deletion target by comparing the information indicating the modified data unit with the deletion target identification information,
setting a transaction identifier to the data set, the transaction identifier indicating a transaction relating to the data set, when the absence of conflict on the deletion target is determined; and
transmitting the transaction identifier to at least one of the plurality of data store management nodes,
wherein the accumulating involves accumulating the deletion target identification information as information indicating the modified data unit in the database system when the absence of conflict on the deletion target is determined.

16. A transaction management program executed by a computer of a transaction management node capable of communicating with a plurality of session management nodes and a plurality of data store management nodes, the transaction management program causes the computer to execute:
acquiring at least a deletion target identification information which indicates a data unit of a deletion target from a data set transmitted by the session management node, the data set including target identification information capable of identifying a data unit of a modification target among a plurality of data stores managed by the plurality of data store management nodes;
accumulating information indicating a modified data unit in a database system;
determining the presence or absence of conflict on the deletion target by comparing the information indicating the modified data unit with the deletion target identification information,
setting a transaction identifier to the data set, the transaction identifier indicating a transaction relating to the data set, when the absence of conflict on the deletion target is determined; and
transmitting the transaction identifier to at least one of the plurality of data store management nodes,
wherein the accumulating involves accumulating the deletion target identification information as information indicating the modified data unit in the database system when the absence of conflict on the deletion target is determined.
